# EUROPÄISCHE PATENTSCHRIFT

(11) **EP 1 247 827 B1**
(45) Veröffentlichungstag und Bekanntmachung des Hinweises auf die Patenterteilung: **21.12.2005**
(21) Anmeldenummer: 02003428.6
(22) Anmeldetag: 14.02.2002
(51) Int. Cl.: C08G 18/48

(54) **Verfahren zur Herstellung von Polyurethan-Weichschaumstoffen**
Process for the preparation of flexible polyurethane foams
Procédé de préparation de mousses flexibles de polyuréthane

(30) Priorität: 13.03.2001 DE 10111823
(43) Veröffentlichungstag der Anmeldung: 09.10.2002
(73) Patentinhaber: BASF Aktiengesellschaft, 67056 Ludwigshafen (DE)
(72) Erfinder: Lutter, Heinz-Dieter, Dr., 49356 Diepholz (DE); Bruchmann, Bernd, Dr., 67251 Freinsheim (DE); Wagner, Klaus, 49419 Wagenfeld (DE); Müller, Jens, 49084 Osnabrück (DE)

(56) Entgegenhaltungen:
- EP-A- 0 047 371
- EP-A- 0 433 878
- GB-A- 1 120 223

## Beschreibung

Gegenstand der Erfindung ist ein Verfahren zur Herstellung von Polyurethan-Weichschaumstoffen, insbesondere hochelastischen Weichschaumstoffen und hoch tragfähigen Weichschaumstoffen, unter Verwendung eines speziellen Polyetheralkols.

Die Herstellung von Polyurethan - im folgenden auch abgekürzt als PU bezeichnet - Weichschaumstoffen durch Umsetzung von höhermolekularen Polyhydroxylverbindungen und gegebenenfalls Kettenverlängerungsmitteln mit organischen Polyisocyanaten ist bekannt und wird in zahlreichen Patent- und Literatur-Publikationen beschrieben.

Beispielhaft genannt sei das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, und 3. Auflage 1993, herausgegeben von Dr. G. Oertel.

Zur Herstellung der PU-Weichschaumstoffe werden üblicherweise als höhermolekulare Polyhydroxylverbindungen Polyesterpolyole und/oder Polyoxyalkylen-polyole auf der Grundlage von 1,2-Propylenoxid, Ethylenoxid oder Gemischen davon sowie Mischungen aus derartigen Polyoxyalkylen-polyolen und Pfropf-polyoxyalkylen-polyolen, als Kettenverlängerungsmittel Alkandiole, Oxalkylenglykole oder hydroxyl- und/oder aminogruppenhaltige, niedermolekulare Verbindungen mit einer Funktionalität von 2 bis 4, wie z.B. Glycerin, Trimethylolpropan oder Alkanolamine verwendet. Als organische Polyisocyanate werden zumeist handelsübliche Toluylen-diisocyanate (TDI), Diphenylmethan-diisocyanat-lsomere (MDI), Mischungen aus Diphenylmethan-diisocyanaten und Polyphenyl-polymethylen-polyisocyanaten (Roh-MDI) und Mischungen aus Roh-MDI und TDI eingesetzt.

Nach Angaben der DE-C-1520737 (US-A-3 336 242) können Polyurethan-Weichschaumstoffe mit offener Zellstruktur nach einem einstufigen Verfahren durch Umsetzung von Polyisocyanaten mit Polyoxypropylen-polyoxyethylentriolen mit Molekulargewichten von 3000 bis 8000, die als Endblock 3 bis 5 Gew.-% Ethylenoxid und als Startermolekül Glycerin gebunden enthalten, hergestellt werden.

Sehr weiche Polyurethan-Weichschaumstoffe erhält man nach GB-A-1 079 105 aus einem Polyetheralkohol oder einer Mischung aus Polyetheralkoholen mit einer Hydroxylzahl von 70 bis 170, die ein trifunktionelles Polyoxyalkylen-polyol, wie z.B. oxpropyliertes Glycerin und bis zu 40 Gew.-% eines Polyoxyalkylenglykols, z.B. oxpropyliertes Ethylenglykol enthält, und einem organischen Polyisocyanat, bevorzugt TDI, in Gegenwart von Wasser und einem Fluorchlorkohlenwasserstoff, vorzugsweise Trichlorfluormethan, als Treibmittel. Flexible PU-Schaumstoffe werden ferner in der GB-A-1 064 576 beschrieben. Nach Angaben dieser Patentschrift werden organische Diisocyanate, vorzugsweise TDI, mit einer Mischung aus 50 bis 90 Gew.-% eines Polyoxyalkylen-triols mit einer Hydroxylzahl von 30 bis 170 und 10 bis 50 Gew.-% eines Polyoxyalkylen-diols mit einer Hydroxylzahl von 40 bis 110, wobei die Mischung einen Gehalt an primären Hydroxylgruppen von 10 bis 65 % besitzt, in Gegenwart von Wasser zur Reaktion gebracht.

Nach Angaben der GB-A-1,480,972 werden Polyurethan-Weichschaumstoffe mit verbesserten Elastizitätseigenschaften in Abwesenheit von Silikon-Schaumstabilisatoren durch Umsetzung von organischen Polyisocyanaten mit einer Mischung aus Polyetherolen, die aus mindestens einem Polyether-polyol mit einer Funktionalität von 2 bis 4, einem Äquivalentgewicht zwischen 1000 und 3000 und gegebenenfalls einem Ethylenoxidgehalt von bis 30 Gew.-% besteht, und 0,5 bis 20 Gew.-%, bezogen auf das Polyetherpolyol, mindestens eines Polyoxypropylen-polyoxyethylenalkohols mit einer Funktionalität von 1 bis 4, einem Äquivalentgewicht von 500 bis 5000 und einem Ethylenoxidgehalt von 30 bis 95 Gew.-%, in Gegenwart von Katalysatoren und Treibmitteln hergestellt.

Aus der DE-A-24 25 657 ist ein Verfahren zur Herstellung von flexiblen Polyurethan-Schaumstoffen bekannt, bei dem neben einem Treibmittel und einem Polyoxyalkylen-polyol als erfindungswesentliche Aufbaukomponente eine Diphenylmethan-diisocyanatzusammensetzung eingesetzt wird, die eine durchschnittliche Isocyanatfunktionalität von weniger als 2,4 aufweist und nicht mehr als 60 Gew.-% 4,4'-MDI und mindestens 15 Gew.-% 2,4'-MDI enthält. Als Polyoxyalkylen-polyole werden bevorzugt Polyoxypropylen-polyoxyethylen-polyole mit einer statistischen oder blockweisen Bindung der Oxyalkylengruppen verwendet, wobei zu ihrer Herstellung als Startermoleküle insbesondere Gemische aus einem Diol und einem Triol, z.B. Diethylenglycol-Glyceringemische, eingesetzt werden. Die beschriebenen Produkte besitzen gute mechanische Eigenschaften, insbesondere eine hohe Stauchhärte und Sag-Faktor. Unter dem Sag-Faktor wird die Stauchhärte bei 65 % Eindruck dividiert durch Stauchhärte bei 25 % Eindruck verstanden. Je höher dieser Wert ist, desto elastischer ist der Schaum. Eine höhere Elastizität wird als komfortabler empfunden.

Wesentlich für die Herstellung von Polyurethan-Weichschaumstoffen und die Eigenschaften der Schaumstoffe ist die genau abgestimmte Reaktivität der eingesetzten Polyetheralkohole.

Ist die Reaktivität eines Polyetheralkohols, der zur Herstellung von Polyurethan-Weichschaumstoffen verwendet wird, zu hoch, so sind die Polyetheralkohole zu aktiv. Als Folge dieser Überaktivierung kann es z.B. bei Formschaumstoffen unmittelbar nach der Entformung zu Deformationen kommen. Ein hinreichend hoher Anteil an offenen Zellen in der Schaummatrix ist erforderlich, um ein späteres Schrumpfen des Formkörpers auszuschließen. Dieses Phänomen ist unmittelbar an die Reaktivität der Polyetherpolyole gekoppelt. Öffnen sich die Zellen durch zu hohe Reaktivität des Polyols zu spät und/oder im zu geringen Maße, so bleibt der Formkörper nach dem Entformen beziehungsweise der Block bei der Herstellung von Blockschaumstoffen nicht dimensionsstabil, weil das in der Zelle befindliche CO₂ ausdiffundieren und die Zelle deshalb schrumpfen wird und die atmosphärische Luft nicht im gleichen Maße eindiffundieren kann. Wenn die Offenzelligkeit zu hoch ist, kollabiert der Schaum.

Bei zu geringer Aktivität hingegen leidet die bei der Herstellung von Formschaumstoffen geschwindigkeitsbestimmende Entformzeit, und die Schaumstoffe werden nicht mehr in einem vorgegebenen möglichst kurzen Zyklus herstellbar. Bei der Herstellung von Blockschaum beobachtet man in diesem Fall das Phänomen des Sink Back, das heißt die Bildung einer Einbuchtung auf dem Block, oder das sogenannte Cold Flow, das heißt die Bildung eines trapezförmigen Blockquerschnitts, der bei der Weiterverarbeitung der Schaumstoffe einen hohen Schneidaufwand und, damit verbunden, Produktverlust mit sich bringt.

Es ist bekannt, daß durch die Erhöhung der Reaktivität eines Blockpolyoxypropylen-polyoxyethylen-polyols eine Zunahme der Reaktionsgeschwindigkeit bei der Herstellung von Polyurethanen beobachtet wird. Die Reaktivität wird üblicherweise durch die Menge des bei der Synthese des Polyetherpolyols am Kettenende angelagerten Ethylenoxids bestimmt. Mit der Erhöhung der Menge des am Kettenende angelagerten Ethylenoxids steigt in der Regel der Anteil der reaktiveren primären Hydroxylgruppen und damit die Reaktivität der Polyetheralkohole an.

Aufgrund dieser Erfahrung sollte man erwarten, daß mit linear steigendem Anteil an Ethylenoxid in den Blockpolyoxypropylen-polyoxyethylen-polyolen auch eine wünschenswerte, möglichst hohe Reaktivität einstellbar wäre. Es hat sich jedoch gezeigt, daß dies nicht der Fall ist.

Insbesondere bei den sogenannten hochtragfähigen Weichschaumstoffen, auch als HLB-Schaumstoffe bezeichnet, und den hochelastischen Weichschaumstoffen, auch als HR-Schaumstoffe bezeichnet, ist eine optimale Reaktivität der Polyole notwendig, um Produkte mit guter Qualität und ohne die geschilderten Nachteile zu erhalten.

Die Aufgabe der vorliegenden Erfindung bestand darin, Polyurethan-Weichschaumstoffe bereitzustellen, bei deren Herstellung als Polyolkomponente ein Polyetheralkohol mit einer optimalen Reaktivität eingesetzt wird und die geschilderten Nachteile des Standes der Technik vermieden werden.

Überraschenderweise wurde nun gefunden, daß Polyetheralkohole mit einem Gehalt an endständig gebundenen Ethylenoxideinheiten von 15 bis 17 Gew.-%, bezogen auf die Gesamtmenge des Alkylenoxids, und einer Hydroxylzahl im Bereich zwischen 20 und 60 mgKOH/g eine optimale Reaktivität insbesondere bei HLB-Schaumstoffen und HR-Schaumstoffen, sowohl für die Herstellung nach dem Block- als auch nach dem Formweichschaumverfahren aufweisen.

Gegenstand der Erfindung ist demzufolge ein Verfahren zur Herstellung von Polyurethan-Weichschaumstoffen durch Umsetzung
a) mindestens einer Verbindung mit mindestens zwei mit Isocyanatgruppen reaktiven Wasserstoffatomen, mit
b) Polyisocyanaten,
dadurch gekennzeichnet, daß als Verbindung mit mindestens zwei mit Isocyanatgruppen reaktiven Wasserstoffatomen a) mindestens ein Blockpolyoxypropylen-polyoxyethylen-polyol mit einer Hydroxylzahl von 25 bis 45 mgKOH/g, vorzugsweise 25 bis 35 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3, eingesetzt wird.

Gegenstand der Erfindung sind weiterhin Polyurethan-Weichschaumstoffe, herstellbar durch Umsetzung a) mindestens einer Verbindung mit mindestens zwei mit Isocyanatgruppen reaktiven Wasserstoffatomen, enthaltend mindestens ein Blockpolyoxypropylen-polyoxyethylen-polyol mit einer Hydroxylzahl von 25 bis 45 mgKOH/g, vorzugsweise 25 bis 35 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3, mit b) Polyisocyanaten.

Gegenstand der Erfindung sind weiterhin Blockpolyoxypropylen-polyoxyethylen-polyole mit einer Hydroxylzahl von 25 bis 45 mgKOH/g, vorzugsweise 25 bis 35 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3.

Gegenstand der Erfindung sind weiterhin Polyolgemische zur Herstellung von Polyurethan-Weichschaumstoffen, enthaltend mindestens ein Blockpolyoxypropylen-polyoxyethylen-polyol mit einer Menge zwischen 15-17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 25 bis 45 mgKOH/g, vorzugsweise 25 bis 35 mgKOH/g.

Bevorzugt sind hierbei Mischungen der erfindungsgemäß eingesetzten Blockpolyoxypropylen-polyoxyethylen-polyole mit mindestes einem Graft-Polyol. Unter Graft-Polyolen versteht man Polyetheralkohole, in denen in-situ olefinisch ungesättigte Monomere polymerisiert wurden. Bevorzugte olefinisch ungesättigte Monomere sind Styrol und Acrylnitril. Bevorzugt sind Graft-Polyole mit einer Hydroxylzahl im Bereich zwischen 20 und 40 mgKOH/g und einem Feststoffgehalt im Bereich zwischen 30 und 50 Gew.-%. Der Anteil der Graft-Polyole in der Mischung liegt vorzugsweise im Bereich zwischen 5 und 95 mgKoH/g, insbesondere zwischen 27 und 75 Gew.-%, bezogen auf die Komponente a.

Hierbei werden bei der Herstellung von hochelastischen Schaumstoffen, auch als HR-Schaumstoffe bezeichnet, bevorzugt Graft-Polyole mit hoher Reaktivität, das heißt einem hohem Gehalt an primären OH-Gruppen am Kettenende, eingesetzt.

Bei der Herstellung von hoch tragfähigen Polyurethan-Weichschaumstoffen, auch als HLB-Schaumstoffe bezeichnet, werden bevorzugt Graft-Polyole mit geringer Reaktivität, das heißt solche Polyole, deren Kettenende bevorzugt sekundäre und damit weniger reaktive OH-Endgruppen enthält, eingesetzt.

Die erfindungsgemäß verwendeten Blockpolyoxypropylen-polyoxyethylen-polyole können nach allgemein bekannten Verfahren hergestellt werden. Zumeist erfolgt ihre Herstellung durch katalytische Anlagerung von Alkylenoxiden an Verbindungen mit aktiven Wasserstoffatomen, sogenannten Startermolekülen. Als Katalysatoren können beispielsweise basische Verbindungen, vorzugsweise Alkalihydroxide, wie Kaliumhydroxid, oder Multimetallcyanidverbindungen, auch als DMC-Katalysatoren bezeichnet, verwendet werden. Die Herstellung von Polyetheralkoholen ist beispielsweise im Kunststoffhandbuch, Band 7 "Polyurethane", Carl Hanser Verlag München Wien, 3. Auflage 1993, Kapitel 3.1.1., beschrieben.

Als Startermoleküle zur Herstellung der erfindungsgemäß verwendeten Blockpolyoxypropylen-polyoxyethylen-polyole werden 3-funktionelle Verbindungen, insbesondere Triole, verwendet. Vorzugsweise werden die Startermoleküle ausgewählt aus der Gruppe, enthaltend Glycerin, Trimethylolpropan und Mischungen aus diesen Verbindungen.

Die erfindungsgemäß eingesetzten Polyetheralkohole enthalten, wie oben ausgeführt, einen endständigen Ethylenoxidblock mit einem Gehalt von 15 bis 17 Gew.-%, bezogen auf die Gesamtmenge des eingesetzten Alkylenoxids. Daneben können die Polyetheralkohole weitere Ethylenoxideinheiten besitzen, die in Form von reinen Ethylenoxid-Blöcken oder als Ethylenoxid-Propylenoxid-Mischblöcke angelagert sind. Die Menge dieses zusätzlichen Ethylenoxids sollte höchstens 10, vorzugsweise höchstens 5 Gew.-%, bezogen auf die Gesamtmenge des eingesetzten Alkylenoxids, betragen.

Vorzugsweise enthalten die erfindungsgemäß eingesetzten Blockpolyoxypropylen-polyoxyethylen-polyole jedoch außer dem Ethylenoxid-Endblock nur Propylenoxideinheiten in der Polyetherkette.

Die nach dem erfindungsgemäßen Verfahren hergestellten Polyurethan-Weichschaumstoffe können, wie ausgeführt, sowohl Blockschaumstoffe als auch Formschaumstoffe sein.

Zur Herstellung der Schaumstoffe werden die Polyisocyanate b) mit den Verbindungen mit mindestens zwei mit Isocyanatgruppen reaktiven Wasserstoffatomen a) in Gegenwart von Treibmitteln, Katalysatoren sowie gegebenenfalls Hilfsmitteln und/oder Zusatzstoffen als Blöcke oder in offenen oder geschlossenen Formen verschäumt. Im sogenannten kontinuierlichen Blockschaumprozess werden die Einzelkomponenten der Formulierung üblicherweise im vorgewählten Mengenverhältnis in separaten Dosierströmen kontinuierlich zum Mischkopf geführt. Die Reaktionsmischung wird auf ein im Anfangssektor zumeist um 3 bis 5 Grad geneigtes Förderband ausgetragen. Es ist mit U-förmig gefalteten Papier belegt. Innerhalb von ca. 6 m nach dem Austrag erreicht der Schaum seine maximale Expansionshöhe und beginnt, Treibmittel abzublasen. Dies ist der Zeitpunkt der Zellöffnung. Der endlose Schaum wird in Blöcke von 2 bis 40 m geschnitten und zur Abkühlung gelagert. Im diskontinuierlichen Blockschaumprozess verfährt man analog, jedoch werden die Einzelkomponenten in einem ca. 60 bis 80 Liter fassenden großen Eduktkessel miteinander während etwa 10 Sekunden verrührt und anschließend in eine starre Form ausgetragen. Nach dem Aufsteigen und Erkalten des Polyadditionsproduktes wird der Schaumstoff aus dieser Form entnommen und der Weiterverarbeitung, zumeist horizontales und vertikales Schneiden, zugeführt.

Beim Formschaumverfahren wird die Reaktionsmischung in eine Form eingetragen, diese verschlossen und der Schaum nach der Reaktion aus der Form entnommen.

Besondere Vorteile beim Einsatz der erfindungsgemäß verwendeten Blockpolyoxypropylen-polyoxyethylen-polyole treten bei der sich schwierig gestaltenden Herstellung sogenannter HR-Blockschaumstoffe im niedrigen Dichtebereich, das heißt bei Dichten < 25 kg/m³, und im hohen Dichtebereich, das heißt bei Dichten > 60 kg/m³, auf. Diese Schaumstoffe finden bevorzugt in der Matratzen und Möbelindustrie Verwendung. Diese hoch elastischen Blockschaumstoffe werden üblicherweise zumeist unter Verwendung von mindestens einem reaktiven Graft-Polyol und mindestens einem reaktiven Polyol hergestellt. Die Kompatibilität zwischen Graft-Polyol einerseits und reaktivem Polyol andererseits ist für die Stabilität der Blockschaumstoffe besonders in den genannten extrem niedrigen oder hohen Dichtebereichen von entscheidender Bedeutung. Gemische aus den erfindungsgemäß verwendeten Blockpolyoxypropylen-polyoxyethylen-polyolen mit wenig reaktiven Pfropf-polyoxyalkylen-polyolen untereinander zeigen bei der Herstellung von HR-Schaumstoffen optimales Verhalten bei der Verschäumung.

Überraschenderweise wurde auch gefunden, daß mit den erfindungsgemäß verwendeten Blockpolyoxypropylen-polyoxyethylen-polyolen eine verbesserte Emulgierfähigkeit der Komponente a) mit dem polaren Rezepturbestandteil Wasser erreicht werden kann, wodurch sich feinere Emulsionsstrukturen und dadurch kleinere Partikel ausbilden können, die zum einen für die Schaumstoffstabilität und zum anderen für die Stabilität des Produktionsprozesses von besonderer Bedeutung sind.

Zu den für die Herstellung der erfindungsgemäßen Polyurethan-Weichschaumstoffe verwendeten Einsatzstoffen ist im einzelnen folgendes zu sagen:

Als Polyisocyanate a) zur Herstellung der erfindungsgemäßen Polyurethan-Weichschaumstoffe eignen sich die an sich bekannten organischen Polyisocyanate. In Betracht kommen beispielsweise aliphatische, cycloaliphatische, arylaliphatische und aromatische mehrwertige Isocyanate. Im einzelnen seien beispielhaft genannt: aliphatische Diisocyanate, wie Ethylen-, 1,4-Tetramethylen-, 1,6-Hexamethylen- und 1,12-Dodecandiisocyanat; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat, sowie beliebige Gemische dieser Isomeren, 4,4'- und 2,4'-Diisocyanato-dicyclohexylmethan; aromatische Diisocyanat, wie 1,3- und 1,4-Phenyldiisocyanat, 2,4- und 2,6-Toluylendiisocyanat sowie beliebige Gemische dieser Isomeren, 2,2'- und 2,4'- und 4,4'-Diphenylmethan-diisocyanat und Naphthalin-1,5-diisocyanat; aromatische Polyisocyanate wie 4 ,4',4"-Triphenylmethan-triisocyanat, 2,4,6-Triisocyanatobenzol und Polyphenylpolymethylen-polyisocyanate. Verwendet werden können ferner modifizierte Polyisocyanate, beispielsweise Carbodiimidgruppen aufweisende Polyisocyanate, Allophanatgruppen aufweisende Polyisocyanate, Isocyanuratgruppen aufweisende Polyisocyanate, Urethangruppen aufweisende Polyisocyanate und Estergruppen aufweisende Polyisocyanate. Derartige Verbindungen sind allgemein bekannt.

Bevorzugt werden die technisch gut zugänglichen, gegebenenfalls Urethangruppen aufweisenden, aromatischen Di- und Polyisocyanate wie 2,4- und 2,6-Toluylendiisocyanat, sowie beliebige Gemische dieser Isomeren, 2,2'- und 2,4'- und 4,4'-Diphenylmethan-diisocyanat sowie beliebige Gemische dieser Isomeren, Mischungen aus 2,2'- 2,4'-, 4,4'-Diphenylmethan-diisocyanaten und Polyphenylpolymethylen-polyisocyanaten (Roh-MDI) und Gemische aus Toluylendiisocyanaten und Roh-MDI. Die genannten Di- und Polyisocyanate können einzeln oder in Form von Mischungen eingesetzt werden.

Sehr gut geeignet sind die erfindungsgemäß verwendeten Blockpolyoxypropylen-polyoxyethylen-polyole auch zur Herstellung von Polyurethan-Weichschaumstoffen unter Verwendung aliphatischer Isocyanate. Weil die mit Verbindungen mit mindestens zwei mit Isocyanatgruppen reaktiven Wasserstoffatomen wenig reaktiven aliphatischen Isocyanate nur in Kombination mit hohen Konzentrationen von Gelkatalysatoren, d.h. solchen Katalysatoren, die bevorzugt die Urethanbildung katalysieren, eine Polyaddition eingehen, ist die Abstimmung der Reaktivität der verwendeten Polyole hier besonders wichtig.

Die erfindungsgemäß verwendeten Blockpolyoxypropylen-polyoxyethylen-polyole können allein oder in Kombination mit anderen Polyolen mit den Polyisocyanaten umgesetzt werden.

Als andere Polyole werden vorzugsweise übliche lineare und/oder verzweigte Polyesterole und insbesondere Polyetherole mit Molekulargewichten von 200 bis 8000, vorzugsweise größer 600 bis 5000, und insbesondere 1800 bis 3500 einzeln oder im Gemisch eingesetzt. In Betracht kommen jedoch auch andere hydroxylgruppenhaltige Polymere mit den obengenannten Molekulargewichten, beispielsweise Polyesteramide, Polyacetale.

Vorzugsweise werden die erfindungsgemäß verwendeten Blockpolyoxypropylen-polyoxyethylen-polyole im Gemisch mit Polyetheralkoholen, insbesondere solchen mit einer Funktionalität im Bereich zwischen 2 und 8, vorzugsweise zwischen 2 und 4 und insbesondere 2 und 3 und den genannten Molekulargewichten eingesetzt. Besonders bevorzugt werden die erfindungsgemäß verwendeten Blockpolyoxypropylen-polyoxyethylen-polyole, wie oben ausgeführt, im Gemisch mit Graft-Polyolen eingesetzt.

Für bestimmte Einsatzgebiete kann es zweckmäßig sein, zur Herstellung der Polyurethan-Weichschaumstoffe neben den genannten Polyhydroxylverbindungen zusätzlich sogenannte Kettenverlängerungsmittel und/oder Vernetzungsmittel mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, Propylenglykol, 1,4'-Butylenglykol, 1,6-Hexamethylenglykol, Glyzerin und Trimethylolpropan

Sofern Kettenverlängerungs- oder Vernetzungsmittel eingesetzt werden, kommen diese in Mengen von 1 bis 60 Gew.-Teilen, vorzugsweise von 10 bis 30 Gew.-Teilen pro 100 Gew.-Teile Polyhydroxylverbindungen zur Anwendung.

Zu Treibmitteln, welche im erfindungsgemäßen Verfahren verwendet werden, gehört vorzugsweise Wasser, das mit Isocyanatgruppen unter Bildung von Kohlendioxid reagiert. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Polyhydroxylverbindung.

Im Gemisch mit oder an Stelle von Wasser können auch sogenannte physikalisch wirkende Treibmittel eingesetzt werden. Dies sind Flüssigkeiten, welche gegenüber den Rezepturbestandteilen inert sind und Siedepunkte unter 100°C, vorzugsweise unter 50°C, insbesondere zwischen -50°C und 30°C bei Atmosphärendruck aufweisen, so daß sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung. Gegebenenfalls kann es zweckmäßig sein, die erfindungsgemäße Polyolkomponente mit dem physikalisch wirkenden Treibmittel zu mischen und dadurch die Viskosität zu verringern.

Zur Beschleunigung der Umsetzung zwischen den Polyhydroxylverbindungen, Wasser und gegebenenfalls Kettenverlängerungsoder Vernetzungsmittel und den Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'- Tetramethyldiamino-diethylether, Bis-(dimethylaminopropyl)-harnstoff, N-Methyl- bzw. N-Ethylmorpholin, Dimethylpiperazin, Pyridin, 1,2-Dimethylimidazol, 1-Azobicyclo-(3,3,0)-octan, Dimethylaminoethanol, 2-(N,N-Dimethyhlaminoethoxy)ethanol, M,N',N''-Tris-(dialkylaminoalkyl)-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinn-dilaurat sowie insbesondere Mischungen aus tertiären Aminen und organischen Zinnsalzen. Eingesetzt werden zweckmäßigerweise 0,1 bis 10 Gew.-%, vorzugsweise 0,5 bis 5 Gew.-% Katalysator auf Basis tertiärer Amine und/oder 0,01 bis 0,5 Gew.-%, vorzugsweise 0,05 bis 0,25 Gew.-% Metallsalze, bezogen auf das Gewicht an Polyhydroxylverbindungen.

Der Reaktionsmischung können auch noch Hilfsmittel und/oder Zusatzstoffe einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester, die in Mengen von 0,2 bis 8, vorzugsweise von 0,5 bis 5 Gewichtsteilen pro 100 Gewichtsteilen Polyhydroxylverbindungen angewandt werden.

Als Flammschutzmittel sind beispielsweise Phosphor- und/oder Halogenatome enthaltende Verbindungen, wie z.B. Trikresylphosphat, Tris-2-chlorethylphosphat, Tris-chlor-propylphosphat und Tris-2,3-dibrompropylphosphat geeignet.

Außer den bereits genannten halogensubstituierten Phosphaten können auch anorganische Flammschutzmittel, beispielsweise Antimontrioxid, Arsenoxid, Ammoniumphosphat und Calciumsulfat, oder Melamin zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel pro 100 Gewichtsteile Polyhydroxylverbindung zu verwenden.

Zur Herstellung der Polyurethan-Weichschaumstoffe werden die erfindungsgemäßen Hydroxylverbindungen, Polyisocyanate und gegebenenfalls Kettenverlängerungs- und/oder Vernetzungsmittel in Gegenwart von Katalysatoren, Treibmitteln und gegebenenfalls Hilfsmitteln und/oder Zusatzstoffen bei Temperaturen von 0 bis 70°C, vorzugsweise 15 bis 50°C in solchen Mengeverhältnissen zur Reaktion gebracht, daß pro NCO-Gruppe 0,5 bis 2 vorzugsweise 0,8 bis 1,3 und insbesondere ungefähr ein reaktive(s) Wasserstoffatom(e) gebunden an die Polyhydroxylverbindung und gegebenenfalls Kettenverlängerungs- oder Vernetzungsmittel vorliegen und das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die aus den erfindungsgemäß verwendeten Blockpolyoxypropylen-polyoxyethylen-polyolen und den aufgeführten Rezepturbestandteilen hergestellten Polyurethan-Weichschaumstoffe besitzen vorzugsweise Dichten von 10 bis 150 kg/m³, insbesondere 20 bis 70 kg/m³ und zeichnen sich durch sehr gute mechanische Festigkeiten und gutes Prozessverhalten aus, das heißt, kritische Rezepturen kollabieren bzw. schrumpfen nicht.

Die Erfindung soll an den nachfolgenden Beispielen näher erläutert werden.

Zur Herstellung der Schaumstoffe wurden alle Komponenten außer dem Polyisocyanat zu einer Polyolkomponente vereinigt und diese durch Rühren mit dem Polyisocyanat vermischt. Die Reaktionsmischung wurde in eine offene Form gegeben und dort frei aufschäumen gelassen.

Bei den Beispielen 1 bis 6 wurde der Schaum mittels einer Labormaschine Cannon Viking (Inhalt des Rührkessels 80 Liter; Rührgeschwindigkeit 1500 Umin⁻¹) diskontinuierlich freiverschäumt hergestellt.

| Verwendete Polyole | | | |
|---|---|---|---|
| Polyol | 1 | 2 erfindungsgemäß | 3 |
| Aufbau | Glyc-PO-EO(14) | Glyc-PO-EO (16) | Glyc-PO-EO (18) |
| OH-Zahl (in mgKOH/g) | 28 | 29 | 30 |
| MW (in g/mol) | 6000 | 6000 | 6000 |
| Viskosität (bei 25°C in mPas) | 1125 | 1166 | 993 |
| Trübungspunkt (°C) | 54,5 | 68 | 73 |

### Beispiele 1 bis 6:

### Hoch elastische PU-Blockschaumstoffe (HR-Schaumstoffe) auf Basis TDI 80

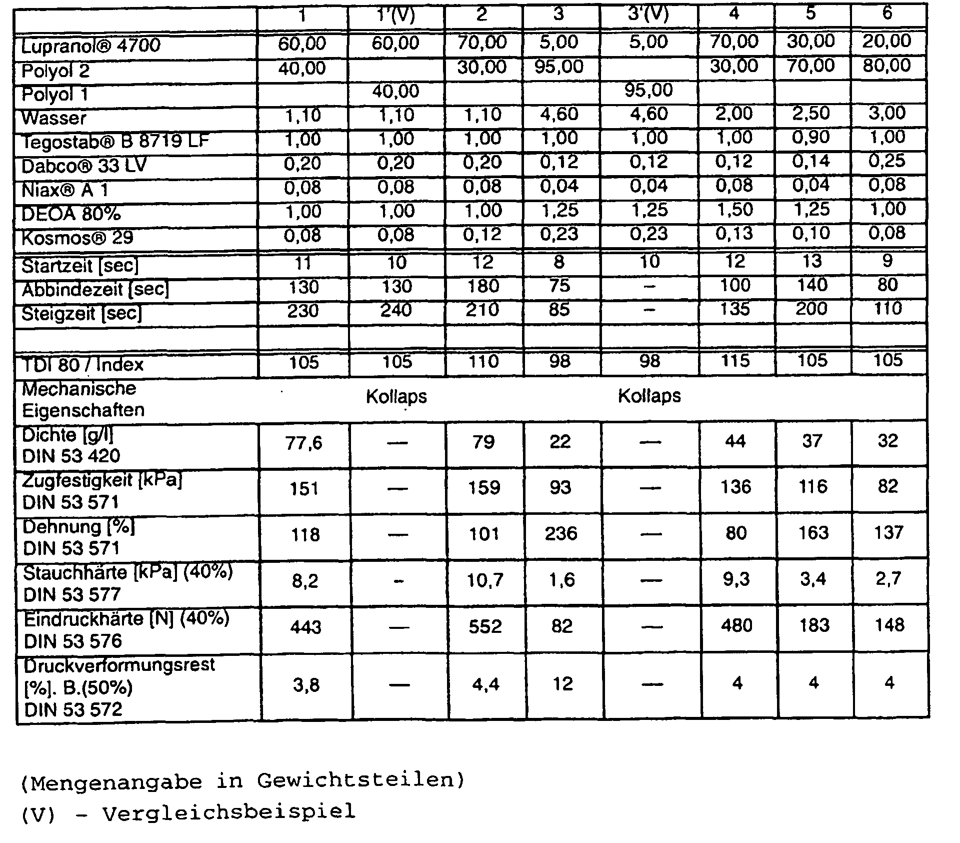

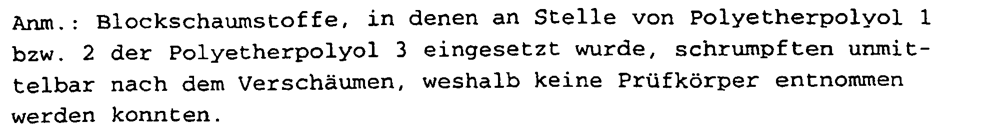

### Beispiele 7 bis 14

### Hochelastische PU-Blockschaumstoffe (HR-Schaumstoffe) auf Basis MDI Diskontinuierlich im Handmischversuch freiverschäumt hergestellte Blockschaumstoffe.

| Polyol-Komp. | 7(V) | 8 | 9(V) | 10 | 11(V) | 12 | 13(V) | 14 |
|---|---|---|---|---|---|---|---|---|
| | | | | | | | | |
| Polyol 1 | 96,000 | | 100,00 | | 96,000 | | 100,00 | |
| Polyol 2 | | 96,000 | | 100,00 | | 96,000 | | 100,00 |
| Lupranol® 2047 | 4,000 | 4,000 | | | 4,000 | 4,000 | | |
| Wasser | 2,540 | 2,540 | 2,750 | 2,750 | 2,540 | 2,540 | 2,750 | 2,750 |
| Niax® A 1 | 0,400 | 0,400 | 0,400 | 0,400 | 0,400 | 0,400 | 0,400 | 0,400 |
| DEOA 100 % | 0,248 | 0,248 | 0,400 | 0,400 | 0,248 | 0,248 | 0,400 | 0,400 |
| DBTL | 0,050 | 0,050 | 0,080 | 0,080 | 0,050 | 0,050 | 0,080 | 0,080 |
| B 8719 | 0,100 | 0,100 | 0,100 | 0,100 | 0,100 | 0,100 | 0,100 | 0,100 |
| Lupranat® VP 9288 | 52,6 | 52,6 | 55,1 | 55,1 | 52,6 | 52,6 | 55,1 | 55,1 |
| Index | 96,0 | 96,0 | 93,3 | 93,3 | 96,0 | 96,0 | 93,3 | 93,3 |
| Startzeit [sec] | 20 | 25 | 20 | 25 | 20 | 20 | 20 | 25 |
| Abbindezeit [sec] | 100 | 95 | 95 | 90 | 90 | 95 | 90 | 90 |
| Steigzeit [sec] | 125 | 130 | 125 | 140 | 120 | 125 | 120 | 140 |

| Mechanische Eigenschaften | | | | | | | | |
|---|---|---|---|---|---|---|---|---|
| Raumgewicht [g/l] DIN 53 420 | 54,9 | 53,2 | 55,3 | 50,1 | 50,1 | 48 | 50,1 | 48,3 |
| Zugfestigkeit [N/mm²] DIN 53 571 | 62 | 80 | 85 | 67,8 | 67,8 | 83 | 67,8 | 75 |
| Dehnung [%] DIN 53 571 | 97 | 104 | 114 | 113 | 113 | 110 | 113 | 110 |
| Stauchhärte 40% [kPa] DIN 53 577 | 4,6 | 4 | 5,5 | 3,5 | 3,5 | 3,1 | 3,5 | 3,2 |
| DVR [%] 22h/70°C/50% DIN 53 572 | 2,6 | 2,9 | 2,4 | 3,3 | 3,3 | 3,3 | 3,3 | 3,3 |
| Rückprallelastizität DIN 53 573 | 60 | 63 | 57 | 59 | 59 | 59 | 59 | 60 |

| eindruckhärte Verf. B DIN 53 576 | | | | | | | | |
|---|---|---|---|---|---|---|---|---|
| 25 % [N] | 171 | 128 | 190 | 94 | 94 | 90 | 94 | 84 |
| 40 % [N] | 238 | 178 | 261 | 142 | 142 | 128 | 142 | 138 |
| 65 % [N] | 460 | 342 | 517 | 286 | 286 | 266 | 286 | 279 |
| (Mengenangabe in Gewichtsteilen) | | | | | | | | |

Schaumstoffe, die wie in Beispiel 8, jedoch mit 4 Gewichtsteilen Polyol 3 an Stelle von Polyol 2, hergestellt wurden, waren nicht dimensionsstabil und schrumpften unmittelbar nach dem Aushärten. Es konnten keine mechanischen Werte bestimmt werden.

### Beispiele 15 bis 18

| | viskoelastisch 15 (V) | viskoelastisch 16 | Elastisch 17 (V) | elastisch 18 |
|---|---|---|---|---|
| Polyol 1 | 55,000 | | 55,000 | |
| Polyol 2 | | 55,000 | | 55,000 |
| Lupranol® 2043 | 9,000 | 9,000 | 27,900 | 27,900 |
| Pluriol® E 400 | 10,000 | 10,000 | 5,000 | 5,000 |
| Glyzerin | 2,000 | 2,000 | 2,000 | 2,000 |
| Lumitol® H 136 | 20,000 | 20,000 | 1,000 | 1,000 |
| 1,4-Butandiol | | | 1,000 | 1,000 |
| Wasser | 3.500 | 3,500 | 3,800 | 3,800 |
| DBTL | 0,350 | 0,350 | 0,300 | 0,300 |
| Basonat® PLH 8926 | 99,9 | 99,9 | 101,6 | 101,6 |
| Index | 80,0 | . 80,0 | 85,6 | 85,6 |
| Startzeit [sec] | 32 | 28 | 40 | 38 |
| Abbindezeit [sec] | 137 | 122 | 215 | 240 |
| Steigzeit [sec] | 200 | 172 | 265 | 350 |
| Raumgewicht [kg/m³] DIN 53 420 | 63,1 | 65,2 | 54,8 | 59,4 |
| Zugfestigkeit [N/mm²] DIN 53 571 | 23 | 24 | 52 | 62 |
| Dehnung [%] DIN 53 571 | 122 | 115 | 82 | 90 |
| Weiterreiß-Graves [N/mm] | 0,12 | 0,13 | 0,24 | 0,25 |
| Stauchhärte 40% [kPa] DIN 53 577 | 1,2 | 1,4 | 2,6 | 3,2 |
| DVR 22h/70°C/50% [%] DIN 53 572 | 1,1 | 0,1 | 0,3 | 0,1 |
| Rückprallelastizität [%] DIN 53 573 | 9 | 8 | 26 | 26 |
| Eindruckhärte Verf. B DIN 53 576 | | | | |
| EDH 25 % [N] | 39 | 44 | 85 | 95 |
| EDH 40 % [N] | 57 | 64 | 135 | 151 |
| EDH 65 % [N] | 126 | 136 | 329 | 356 |
| ¹⁾ Das Lumitol wurde vor dem Einsatz vom Lösungsmittel befreit (Mengenangabe in Gewichtsteilen) | | | | |

Schaumstoffe, die wie in Beispiel 16, jedoch mit 55 Gew.-Teilen Polyol 3 an Stelle von Polyol 2 hergestellt wurden, waren nicht dimensionsstabil und schrumpften unmittelbar nach dem Aushärten.

Die nach dem erfindungsgemäßen Verfahren hergestellten Schaumstoffe zeichnen sich durch verbesserte Zugfestigkeit und Elastizität aus, außerdem kann bei gleicher Rezeptierung eine geringere Rohdichte erzielt werden.

### Einsatzstoffe:

- Lupranol® 4700: Graft-Polyetherpolyol, Basis Acrylnitril/-Styrol, Hydroxylzahl 29 mg KOH/g, Feststoffgehalt: 40 %, Viskosität 5000 mPas (25°C)
- Lupranol® 2047: Polyoxypropylen-polyoxyethylentriol, Hydroxylzahl 42 KOH/g
- DBTL:: Dibutylzinn-dilaurat
- DEOA:: Diethanolamin 80%ig in Wasser
- Niax® A1: Bis(N,N-dimethylaminoethyl)ether, 70%ig in Dipropylenglykol
- DABCO®33 LV: Diazabicyclooktan, 33 %-ig in Dipropylenglykol
- Tegostab® B8719 LF:: Silikonstabilisator, Firma Goldschmidt
- Kosmos ® 29:: Zinnoktoat; Katalysator, Firma Goldschmidt
- Lupranat ® VP 9288: modifiziertes MDI der BASF-AG, NCO-Gehalt: 28,3 %, Viskosität (25°C): 70 mPas
- Basonat® P LR 8926:: Polyisocyanat aus HDI, NCO-Gehalt 19,0 Gew.-%
- Pluriol® E 400:: Polyoxyethylendiol, Hydroxylzahl 280 mg KOH/g
- Lumitol® H 136:: Acrylatharz, Festgehalt 70 %, Hydroxylzahl 135 mg KOH/g
- Polyole 1 bis 3: Hergestellt durch Anlagerung von Propylenoxid und anschließend einem Ethylenoxid-Endblock der angegebenen Länge an Glyzerin, die Anlagerung erfolgte mittels KOH.

## Patentansprüche

1. Verfahren zur Herstellung von Polyurethan-Weichschaumstoffen durch Umsetzung
a) mindestens einer Verbindung mit mindestens zwei mit Isocyanatgruppen reaktiven Wasserstoffatomen, mit
b) Polyisocyanaten,
**dadurch gekennzeichnet, daß** als Verbindung mit mindestens zwei mit Isocyanatgruppen reaktiven Wasserstoffatomen a) mindestens ein Blockpolyoxypropylen-polyoxyethylen-polyol mit einer Hydroxylzahl von 25 bis 45 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3, eingesetzt wird.

2. Verfahren nach Anspruch 1, **dadurch gekennzeichnet, daß** das Blockpolyoxypropylen-polyoxyethylen-polyol eine Hydroxylzahl von 25 bis 35 mgKOH/g aufweist.

3. Verfahren nach Anspruch 1, **dadurch gekennzeichnet, daß** das Blockpolyoxypropylen-polyoxyethylen-polyol im Gemisch mit anderen Polyolen eingesetzt wird.

4. Verfahren nach Anspruch 1, **dadurch gekennzeichnet, daß** das Blockpolyoxypropylen-polyoxyethylen-polyol im Gemisch mit Graft-Polyolen eingesetzt wird.

5. Verfahren nach Anspruch 1, **dadurch gekennzeichnet, daß** die Polyurethan-Weichschaumstoffe nach dem Formschaumverfahren hergestellt werden.

6. Verfahren nach Anspruch 1, **dadurch gekennzeichnet, daß** die Polyurethan-Weichschaumstoffe nach dem Blockschaumverfahren hergestellt werden.

7. Polyurethan-Weichschaumstoffe, herstellbar durch Umsetzung a) mindestens einer Verbindung mit mindestens zwei mit Isocyanatgruppen reaktiven Wasserstoffatomen, enthaltend mindestens ein Blockpolyoxypropylen-polyoxyethylen-polyol mit einer Hydroxylzahl von 25 bis 45 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3, mit b) Polyisocyanaten.

8. Blockpolyoxypropylen-polyoxyethylen-polyole mit einer Hydroxylzahl von 25 bis 45 mgKOH/g und einem Gehalt an endständig gebundenen Ethylenoxideinheiten von 15 bis 17 Gew.-%, bezogen auf die Gesamtmenge des Alkylenoxids, herstellbar durch Anlagerung von Ethylenoxid und Propylenoxid an ein Startermolekül mit einer durchschnittlichen Funktionalität von 3.

9. Polyolgemische zur Herstellung von Polyurethan-Weichschaumstoffen, enthaltend mindestens einen Blockpolyoxypropylen-polyoxyethylen-polyol mit einer Menge zwischen 15 bis 17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 25 bis 45 mgKOH/g.

10. Polyolgemische nach Anspruch 8, enthaltend mindestens einen Blockpolyoxypropylen-polyoxyethylen-polyol mit einer Menge zwischen 15 bis 17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 25 bis 45 mgKOH/g und mindestens ein Graft-Polyol.

11. Polyolgemische nach Anspruch 8, enthaltend mindestens einen Blockpolyoxypropylen-polyoxyethylen-polyol mit einer Menge zwischen 15 bis 17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 25 bis 45 mgKOH/g und mindestens ein Graft-Polyol mit einer Hydroxylzahl im Bereich zwischen 20 und 40 mgKOH/g.

12. Polyolgemische nach Anspruch 8, enthaltend mindestens einen Blockpolyoxypropylen-polyoxyethylen-polyol mit einer Menge zwischen 15 bis 17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 35 bis 45 mgKOH/g, und mindestens ein Graft-Polyol mit einer Hydroxylzahl im Bereich zwischen 20 und 40 mgKOH/g wobei der Anteil der Graft Polyole im Bereich zwischen 5 und 95 mgKoH/g, bezogen auf das Polyolgemisch, liegt.

13. Polyolgemische nach Anspruch 8, enthaltend mindestens einen Blockpolyoxypropylen-polyoxyethylen-polyol mit einer Menge zwischen 15 bis 17 Gew.-% Ethylenoxid, bezogen auf die Gesamtmenge des angelagerten Alkylenoxids, welches am Ende der Polyetherkette angelagert wird, und einer Hydroxylzahl im Bereich zwischen 35 bis 45 mgKOH/g, und mindestens ein Graft-Polyol mit einer Hydroxylzahl im Bereich zwischen 20 und 40 mgKOH/g wobei der Anteil der Graft Polyole im Bereich zwischen 27 und 75 Gew.-%, bezogen auf das Polyolgemisch, liegt.

## Claims

1. A process for producing flexible polyurethane foams by reacting
a) at least one compound having at least two hydrogen atoms which are reactive toward isocyanate groups with
b) polyisocyanates,
wherein at least one block polyoxypropylene-polyoxyethylene polyol which has a hydroxyl number of from 25 to 45 mg KOH/g and a content of terminally bound ethylene oxide units of from 15 to 17% by weight, based on the total amount of alkylene oxide, and can be prepared by addition of ethylene oxide and propylene oxide onto a starter molecule having an average functionality of 3 is used as compound having at least two hydrogen atoms which are reactive toward isocyanate groups a).

2. The process according to claim 1, wherein the block polyoxypropylene-polyoxyethylene polyol has a hydroxyl number of from 25 to 35 mg KOH/g.

3. The process according to claim 1, wherein the block polyoxypropylene-polyoxyethylene polyol is used in admixture with other polyols.

4. The process according to claim 1, wherein the block polyoxypropylene-polyoxyethylene polyol is used in admixture with graft polyols.

5. The process according to claim 1, wherein the flexible polyurethane foams are produced by the molded foam process.

6. The process according to claim 1, wherein the flexible polyurethane foams are produced by the slabstock foam process.

7. A flexible polyurethane foam which can be produced by reacting a) at least one compound having at least two hydrogen atoms which are reactive toward isocyanate groups, comprising at least one block polyoxypropylene-polyoxyethylene polyol which has a hydroxyl number of from 25 to 45 mg KOH/g and a content of terminally bound ethylene oxide units of from 15 to 17% by weight, based on the total amount of alkylene oxide, and can be prepared by addition of ethylene oxide and propylene oxide onto a starter molecule having an average functionality of 3, with b) polyisocyanates.

8. A block polyoxypropylene-polyoxyethylene polyol which, has a hydroxyl number of from 25 to 45 mg KOH/g and a content of terminally bound ethylene oxide units of from 15 to 17% by weight, based on the total amount of alkylene oxide, and can be prepared by addition of ethylene oxide and propylene oxide onto a starter molecule having an average functionality of 3.

9. A polyol mixture for producing flexible polyurethane foams, comprising at least one block polyoxypropylene-polyoxyethylene polyol comprising an amount of from 15 to 17% by weight of ethylene oxide, based on the total amount of alkylene oxide added on, which is added on at the end of the polyether chain and having a hydroxyl number in the range from 25 to 45 mg KOH/g.

10. The polyol mixture according to claim 8 comprising at least one block polyoxypropylene-polyoxyethylene polyol comprising an amount of from 15 to 17% by weight of ethylene oxide, based on the total amount of alkylene oxide added on, which is added on at the end of the polyether chain and having a hydroxyl number in the range from 25 to 45 mg KOH/g and at least one graft polyol.

11. The polyol mixture according to claim 8 comprising at least one block polyoxypropylene-polyoxyethylene polyol comprising an amount of from 15 to 17% by weight of ethylene oxide, based on the total amount of alkylene oxide added on, which is added on at the end of the polyether chain and having a hydroxyl number in the range from 25 to 45 mg KOH/g and at least one graft polyol having a hydroxyl number in the range from 20 to 40 mg KOH/g.

12. The polyol mixture according to claim 8 comprising at least one block polyoxypropylene-polyoxyethylene polyol comprising an amount of from 15 to 17% by weight of ethylene oxide, based on the total amount of alkylene oxide added on, which is added on at the end of the polyether chain and having a hydroxyl number in the range from 35 to 45 mg KOH/g and at least one graft polyol having a hydroxyl number in the range from 20 to 40 mg KOH/g, with the proportion of the graft polyols being in the range from 5 to 95 mg KOH/g, based on the polyol mixture.

13. The polyol mixture according to claim 8 comprising at least one block polyoxypropylene-polyoxyethylene polyol comprising an amount of from 15 to 17% by weight of ethylene oxide, based on the total amount of alkylene oxide added on, which is added on at the end of the polyether chain and having a hydroxyl number in the range from 35 to 45 mg KOH/g and at least one graft polyol having a hydroxyl number in the range from 20 to 40 mg KOH/g, with the proportion of the graft polyols being in the range from 27 to 75% by weight, based on the polyol mixture.

## Revendications

1. Procédé de préparation de mousses souples de polyuréthanne, par réaction
a) d'au moins un composé comportant au moins deux atomes d'hydrogène réactifs avec des groupes isocyanate, avec
b) des polyisocyanates,
**caractérisé en ce que**, comme composé comportant au moins deux atomes d'hydrogène réactifs avec des groupes isocyanate a), on met en oeuvre au moins un polyoxypropylène-polyoxyéthylène-polyol bloc ayant un indice d'hydroxyle de 25 à 45 mg de KOH/g et une teneur en unités d'oxyde d'éthylène fixées en fin de chaîne de 15 à 17 % en poids, par rapport à la quantité totale de l'oxyde d'alkylène, qui est préparable par fixation par addition d'oxyde d'éthylène et d'oxyde de propylène sur une molécule de départ présentant une fonctionnalité moyenne de 3.

2. Procédé suivant la revendication 1, **caractérisé en ce que** le polyoxypropylène-polyoxyéthylène-polyol bloc présente un indice d'hydroxyle de 25 à 35 mg de KOH/g.

3. Procédé suivant la revendication 1, **caractérisé en ce que** le polyoxypropylène-polyoxyéthylène-polyol bloc est mis en oeuvre en mélange avec d'autres polyols.

4. Procédé suivant la revendication 1, **caractérisé en ce que** le polyoxypropylène-polyoxyéthylène-polyol bloc est mis en oeuvre en mélange avec des polyols greffés.

5. Procédé suivant la revendication 1, **caractérisé en ce que** les mousses souples de polyuréthanne sont préparées selon le procédé de moussage dans un moule.

6. Procédé suivant la revendication 1, **caractérisé en ce que** les mousses souples de polyuréthanne sont préparées selon le procédé de moussage en blocs.

7. Mousses souples de polyuréthanne, que l'on peut préparer par réaction a) d'au moins un composé comportant au moins deux atomes d'hydrogène réactifs avec des groupes isocyanate, qui contient au moins un polyoxypropylène-polyoxyéthylène-polyol bloc ayant un indice d'hydroxyle de 25 à 45 mg de KOH/g et une teneur en unités d'oxyde d'éthylène fixées en fin de chaîne de 15 à 17 % en poids, par rapport à la quantité totale de l'oxyde d'alkylène, préparable par fixation par addition d'oxyde d'éthylène et d'oxyde de propylène sur une molécule de départ ayant une fonctionnalité moyenne de 3, avec b) des polyisocyanates.

8. Polyoxypropylène-polyoxyéthylène-polyols blocs présentant un indice d'hydroxyle de 25 à 45 mg de KOH/g et une teneur en unités d'oxyde d'éthylène fixées en fin de chaîne de 15 à 17 % en poids, par rapport à la quantité totale de l'oxyde d'alkylène, préparables par fixation par addition d'oxyde d'éthylène et d'oxyde de propylène sur une molécule de départ ayant une fonctionnalité moyenne de 3.

9. Mélanges de polyols pour la préparation de mousses souples de polyuréthanne, contenant au moins un polyoxypropylène-polyoxyéthylène-polyol bloc comportant, par rapport à la quantité totale d'oxyde d'alkylène fixé par addition, une quantité comprise entre 15 et 17 % en poids d'oxyde d'éthylène qui est fixé par addition à la fin de la chaîne de polyéther, et un indice d'hydroxyle d'un ordre compris entre 25 et 45 mg de KOH/g.

10. Mélanges de polyols suivant la revendication 8, contenant au moins un polyoxypropylène-polyoxyéthylène-polyol bloc présentant, par rapport à la quantité totale de l'oxyde d'alkylène fixé par addition, une quantité comprise entre 15 et 17 % poids d'oxyde d'éthylène qui est fixé par addition à la fin de la chaîne de polyéther, et un indice d'hydroxyle d'un ordre compris entre 25 et 45 mg de KOH/g, et au moins un polyol greffé.

11. Mélanges de polyols suivant la revendication 8, contenant au moins un polyoxypropylène-polyoxyéthylène-polyol bloc présentant, par rapport à la quantité totale de l'oxyde d'alkylène fixé par addition, une quantité comprise entre 15 et 17 % en poids d'oxyde d'éthylène qui est fixé par addition à la fin de la chaîne de polyéther, et un indice d'hydroxyle d'un ordre compris entre 25 et 45 mg de KOH/g, et au moins un polyol greffé ayant un indice d'hydroxyle d'un ordre compris entre 20 et 40 mg de KOH/g.

12. Mélanges de polyols suivant la revendication 8, contenant au moins un polyoxypropylène-polyoxyéthylène-polyol bloc présentant, par rapport à la quantité totale de l'oxyde d'alkylène fixé par addition, une quantité comprise entre 15 et 17 % en poids d'oxyde d'éthylène qui est fixé par addition à la fin de la chaîne de polyéther, et un indice d'hydroxyle d'un ordre compris entre 35 et 45 mg de KOH/g, et au moins un polyol greffé ayant un indice d'hydroxyle d'un ordre compris entre 20 et 40 mg de KOH/g, la proportion des polyols greffés étant d'un ordre compris entre 5 et 95 mg de KOH/g, par rapport au mélange de polyols.

13. Mélanges de polyols suivant la revendication 8, contenant au moins un polyoxypropylène-polyoxyéthylène-polyol bloc présentant, par rapport à la quantité totale de l'oxyde d'alkylène fixé par addition, une quantité comprise entre 15 et 17 % en poids d'oxyde d'éthylène qui est fixé par addition à la fin de la chaîne de polyéther, et un indice d'hydroxyle d'un ordre compris entre 35 et 45 mg de KOH/g, et au moins un polyol greffé ayant un indice d'hydroxyle d'un ordre compris entre 20 et 40 mg de KOH/g, la proportion des polyols greffés étant d'un ordre compris entre 27 et 75 % en poids, par rapport au mélange de polyols.
